# EUROPEAN PATENT APPLICATION

(11) **EP 0 626 199 A2**
(43) Date of publication of application: **30.11.1994**
(21) Application number: 94303640.0
(22) Date of filing: 20.05.1994
(51) Int. Cl.: B01J 20/20, B01D 53/04

(54) **Process for the production of carbon molecular sieves**

(30) Priority: 28.05.1993 GB 9311122
(71) Applicant: THE BRITISH PETROLEUM COMPANY P.L.C., London EC2M 7BA (GB)
(72) Inventor: Audley, Gary James, BP Int. Ltd., Research and, Sunbury on Thames, Middlesex TW16 7LN (GB); Tennison, Stephen Robert, BP Int. Ltd., Research, Sunbury on Thames, Middlesex TW16 7LN (GB); Grint, Alan, Northwich, Cheshire CW9 6BU (GB)
(74) Representative: Preece, Michael

(57) **Abstract**

A process for the production of a carbon molecular sieve which comprises (a) treating a thermoset phenolic resin with cations of a metal of Group IA of the Periodic Table so as to deposit on the resin a total quantity of Group IA metal in the range of from 1x10⁻⁶ to 1x10⁻² moles per mole of carbon in the final molecular sieve product and subsequently (b) carbonising the thermoset phenolic resin by heating it to a temperature in the range of from 600 to 1000°C while maintaining a reduced pressure over the material being carbonised at least while the carbon is being heated at a temperature above 500°C.

## Description

The present invention relates to a process for producing carbon molecular sieves.

It is known to make adsorbent carbons by various methods. Thus numerous methods are known for making active carbons. However many carbons, such as active carbons, will adsorb large amounts of various different materials but are not suitable for the separation of the components of a mixture on the basis of differences in molecular weight, molecular size or molecular shape.

It has been proposed to modify the properties of active carbons derived from coal or cokes by heating the starting material in the presence of KOH, for example as disclosed in US 4 082 694. The addition of potassium ions to coal or lignite is also disclosed in US 4 039 473 and US 3 764 561. However active carbons made by heating coal or coke in the presence of KOH are not suitable for use as molecular sieves as they are insufficiently selective.

Carbon molecular sieves are known which may be used for example for the separation of nitrogen and oxygen. Thus US 4 629 476 discloses such a carbon molecular sieve. It is made by starting with a coal or a carbon of vegetable origin and using a polymer to block macropores in the carbonaceous substrate. US 4 458 022 refers to the presence of alkali metal compounds in the context of preparing carbon molecular sieves. However the specification states that, in the preparation of molecular sieves from coconut shell, the graphitisation of the coconut shell is hindered by the presence of alkali metal compounds. These are therefore removed by acid washing.

It is proposed in GB 1 330 296 to prepare carbon articles from thermoplastic alkaline phenol-aldehyde resin precursors which are heated to form a thermoplastic product, which is then finely divided, shaped, sintered, and carbonised. The production of a non-porous body is disclosed. Although there is a reference to adjusting porosity, the use of a thermoplastic resin will lead to the production of non-macroporous materials, which will not be suitable for use as molecular sieves.

Japanese unexamined published specification 61-6108 discloses a carbon molecular sieve suitable for separating hydrocarbon isomers which is produced by carbonising a mixture of PVA derivatives and phenolic resin.

The polyvinyl alcohol derivative is said to act as a pore former giving the micropores required for molecular sieve activity. The specification gives an example of a material prepared from a resol phenolic resin without the addition of a PVA derivative. This was made by carbonising to 600°C in a nitrogen atmosphere followed by activation for one hour in a steam atmosphere. The resulting product was not a satisfactory molecular sieve.

It would be desirable to find a method of making carbon molecular sieves with improved activities which do not require the use of expensive organic pore forming polymers and which used a synthetic starting material which could be produced under controlled conditions.

According to the present invention there is provided a process for the production of a carbon molecular sieve suitable for use in the separation of gases which comprises
(a) treating a thermoset phenolic resin with cations of a metal of Group IA of the Periodic Table so as to deposit on the resin a total quantity of Group IA metal in the range of from 1 x 10⁻⁶ to 1 x 10⁻² moles per mole of carbon in the final molecular sieve product, and subsequently
(b) carbonising the thermoset phenolic resin by heating it to a temperature in the range of from 600 to 1000°C while maintaining a reduced pressure over the material being carbonised at least while the carbon is being heated at a temperature above 500°C.

References to the Periodic Table are references to the Periodic Table as published in the Guide to Classification in Section C of the British Patent Office Classification in which Group IA are the alkali metals and hydrogen.

The quantity of Group IA metal desposited on the resin is preferably in the range 1 x 10⁻⁴ to 6 x 10⁻⁴ moles per mole of carbon in the final product.

In the preferred methods for making the carbons of the present invention a thermoplastic phenolic resin and a cross-linking agent are subjected to a pre-cure step to produce a partially cured thermoset resin which is then comminuted to give particles of partially cured phenolic resin before the treatment with cations of metals of Group IA metals.

### Alternative methods of introducing the Group IA metal

The Group IA metal can be introduced after the final curing step to give a thermoset resin by an ion-exchange process. Alternatively the group IA metal can be introduced by incorporating Group IA metal compounds before the final curing step which gives the thermoset resin which is carbonised.

In one method of carrying out the invention one or more compounds containing the required cations are mixed with the pre-cured resin particles and the resulting mixture is then formed into shaped articles. The shaped articles are then subjected to a further curing step (a post-comminution curing step or "post-cure" step) preferably in the presence of additional cross-linking agent to cause the particles to sinter together to give a porous product. The post-cure step may be carried out as one step with the subsequent carbonisation.

In the method described above all the metal cations mixed with the pre-cured resin particles will be retained in the shaped article. This has advantages in better control of the amount of cation introduced into the product to be carbonised.

In an alternative method of carrying out the invention starting with partially cured thermoset particles the phenolic resin particles are formed into shaped articles together with additional quantities of cross-linking agent and subjected to a "post-cure" step to produce a shaped porous thermoset phenolic resin article. The porous article is then subjected to treatment with a solution containing Group IA metal cations so as to deposit cations by ion-exchange on the resin. In order to introduce the required quantity of cation it is be necessary to control the ion-exchange characteristics of the resin. This may be done for example by adding controlled quantities of certain water-miscible polymers, e.g. polyethyleneglycol, to the mixture of partial cured thermoset phenolic resin polymers and cross-linking agent which are used to form the shaped articles.

There are process steps which may be used in the production of the carbon regardless of the stage at which the metal is introduced. These are discussed in more detail below.

### The Thermoset Phenolic Resin

The thermoset phenolic resin treated with the metal cations of Group IA metal may be a fully thermoset resin or it may be a partially cured thermoset resin with an ability for individual particles of the resin to sinter together on heating. It must not however be a thermoplastic resin which would melt during the initial heating stage involved in carbonisation so as to give a non-macroporous carbon.

The thermoset resin subjected to carbonisation may be in the form of a powder, for example of particle size in the range 250 micrometres to preferably less than 106 micrometres, or may be pellets, granules, extrudates or larger artefacts prepared by various methods e.g. moulding.

### The Preparation of the Thermoset Phenolic Resin

Phenolic resol resins are made by alkaline condensation of phenol and formaldehyde. These will generally give resins with an excessive amount of Group IA metal cation. It is generally preferred to use thermoset phenolic resins derived from Novolak resins, to which the required amount of metal has been added. Novolak phenol-formaldehyde resins are thermoplastic resins produced by condensation of phenol and formaldehyde under acid conditions.

### Curing Prior to Comminution ("pre-cure")

As indicated above the thermoplastic phenolic resin is preferably converted into a thermoset partially cured phenolic resin prior to a comminution step.

The partial cure is preferably carried out by heating a Novolak resin together with a cross-linking agent. Methods of converting Novolak resins into thermoset resins are well known. The cross-linking agent is effectively a source of formaldehyde. Although formaldehyde itself can be used it may be more convenient to use hexamethylene tetramine ("hex"), particularly as moulding powders containing this cross-linking agent are commercially available.

The cross-linking reaction is initiated by heating. The quantity of cross-linking agent, the time and the temperature are preferably controlled such that the resulting resin is not completely cured (i.e. it is still capable of sintering together and further curing) but is sufficiently thermoset that it will not melt.

The quantity of cross-linking agent preferably corresponds to 1-5% by weight of hexamethylene tetramine based on the weight of phenolic resin.

An example of a combination of cross-linking amount, time and temperature which can be used for a Novolak resin with 2.5-3% by weight of tetramethylene hexamine are those in the range 130-200°C with times in the range 24 hours to 30 minutes. Lower temperatures require longer heating times.

### Comminution

The initially formed pre-cured product is comminuted by any convenient method to give resin particles preferably having a particle size below 500 micrometres, preferably below 120 micrometres, preferably below 60 micrometres. The comminution may be carried out until substantially all the particles are below a desired size limit. Alternatively particles below the desired size limit may be separated from the comminuted product for example by sieving. The remaining material may be returned to the comminution process.

### Forming into Shaped Articles

In a preferred method of carring out the invention partially cured thermoset phenolic resin is then formed into shaped articles. Although it is theoretically possible to use adsorbent carbon in the form of very fine powders such powders are very difficult to handle. It is therefore desirable to be able to produce adsorbent carbon in the form of relatively large shaped articles e.g. pellets extrudates and granules. The forming process of the present invention allows such shaped articles to be produced before the carbonisation step. The forming process of the present invention may be carried out for example by the use of tabletting presses or by extrusion.

As indicated above the step of introducing the cations may be carried out either before forming the shaped articles or after porous phenolic resin articles have been produced following the forming and a subsequent additional curing step. The pre-cured thermoset phenolic resin particles subjected to the step of being formed into shaped articles may also contain additional cross-linking agent e.g. hexamethylene tetramine. The quantity of cross-linking if present may be such as to correspond to up to 15% by weight of hexamethylene tetramine, preferably 5-10% by weight based on the weight of phenolic resin. The hexamethylene is preferably added as an aqueous solution.

Where shaped articles are produced from the phenolic resin particles by tabletting or extruding then it will generally be necessary to incorporate a lubricant into the material to be shaped. Such lubricants are conventional in tabletting and extrusion processes. Polyethylene glycols may be used as lubricants, preferably added as aqueous solution. Where compounds providing the required metal cations are incorporated directly into the mixture to be formed into shaped articles then any polyethylene glycol present acts essentially as a lubricant. However where the metal cation is subsequently introduced by ion-exchange then the polyethylene glycol helps to control the uptake of the metal cation in the ion-exchange step.

An example of a preferred polyethylene glycols is one having a MW of 6000. Examples of quantities of polyethylene glycol which may be used particularly when cations are introduced by ion exchange is 5 to 15% wt.

### The Post-Comminution Curing Step

After forming the shaped article a heating step is carried out to further cure it. This heating step may be carried out at temperatures in the range 100° to 200°C, and times in the range 24 hours to 30 minutes.

The post-comminution curing step may be combined with the carbonisation step, so that the initial heating completed any curing still possible, and further heating results in carbonisation.

However if the Group IA metal cations are introduced by ion-exchange it is desirable to carry out a separate post-cure step prior to the ion-exchange treatment. The post-cure step helps to give a phenolic resin which takes up the optimum quantities of Group IA metal.

### The carbonisation step

The carbonisation step is carried out by heating the Group IA modified thermoset phenolic resin to a temperature in the range 600°C to 1000°C, more preferably 700° to 850°C. The heating step may be carried out in an inert atmosphere initially but may be completed under a reduced pressure. It may be convenient to carry out the initial stage of heating the resin under a stream of inert gas to carry away decomposition products. However the step of heating the material to be carbonised above 500°C is preferably carried out under reduced pressure. By reduced pressure we mean an absolute pressure of not more than 10kPa, more preferably not more than 1000 Pa.

The rate of heating of the material to be carbonised may for example be from 0.1 to 5°C/minute. Once the carbon has reached the temperature of 600°C to 1000°C it may be held there, for example for up to 6 hours, before being allowed to cool. It should be noted that the requirement for the heating to be carried out under reduced pressure does not exclude the presence of inert gas in contact with the carbonised material at temperatures above 500°C during the cooling step, providing that the carbon has been subjected to reduced pressure during the heating step during the carbonisation step.

### Use

The molecular sieves prepared according to the present invention are particularly suitable for use in the separation of gases. In particular the process of the present invention may be used to make carbon molecular sieves for the separation of nitrogen and oxygen by pressure swing absorption, or of carbon dioxide and methane.

### Examples

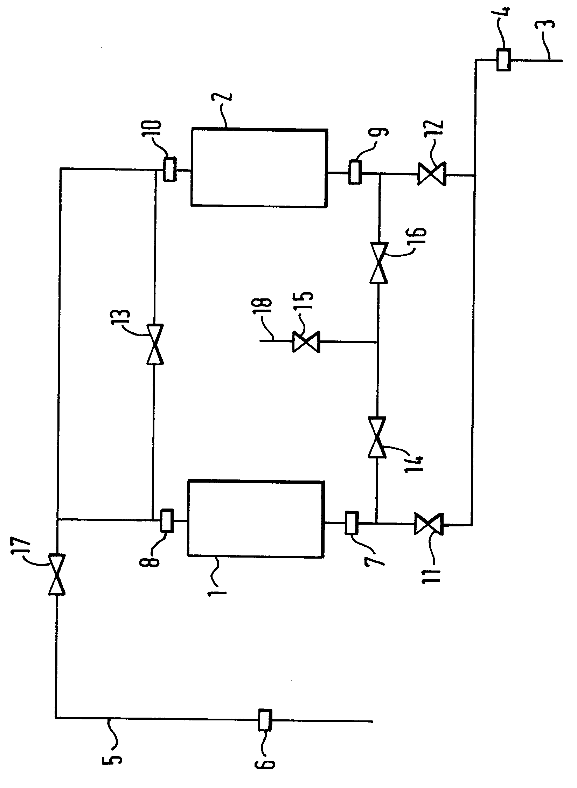

The invention will now be described with reference to Figure 1 which is a diagrammatic representation of a pressure swing adsorption apparatus and to the following Examples.

### Example 1

The starting material was a Novolak resin moulding powder containing 3% by weight of hexamethylene tetramine, commercially available from BP Chemicals Limited.

A layer (25 mm deep) of the resin was heated on a tray in an air circulating oven at 150°C for 2 hours. The resulting partially cured resin sheet was ground in a laboratory grinder until substantially all the resin had a particle size below 106 micrometres. The ground resin was then mixed with an aqueous solution of (a) hexamethylene tetramine and (b) polyethylene glycol having a molecular weight of 6000 so as to give a product containing 7% by weight of hexamethyl tetramine by weight of the resin and 10% by weight of polyethylene glycol based on the weight of the resin. The mixture was then formed into pellets in a tabletting press. The pellets were then cured in an oven at 150°C for 1 hour. They were then ground in a laboratory mill until substantially all the resin had a particle size in the range 355-125 micrometre. The ground resin was then subjected to ion exchange with a 0.5 molar aqueous solution of sodium acetate.

The ground resin was immersed in the aqueous solution and allowed to remain until ion exchange was complete.

The ion exchange carbon was then washed with water until pH of solution was neutral.

The ion exchanged resin was then carbonised. The resin was introduced into a furnace at 25°C and the pressure in the furnace reduced to below 10⁻¹ mbar 100 pa. The furnace was then heated at the rate of 5°C per minute (while maintaining a reduced pressure) to 800°C. (The vacuum pump continued to operate but the pressure rose due to evolved volatile materials). The furnace was held at 800°C for 15 minutes and then cooled back to 25°C while maintaining a reduced pressure.

### Example 2

A carbon molecular sieve was prepared as in Example 1 except that instead of the formed and cured phenolic resin being ground to a particle size in the range 355-125 micrometres it was ground to a size in the range 1-2 mm.

### Example 3

This Example shows the use of a carbon molecular sieve made according to Example 1 in a pressure swing adsorption process for the separation of nitrogen from air.

The apparatus used is shown in Figure 1. It consists of two vessels 1 and 2, each containing a bed of carbon of 20 cm³ volume. Gas could be admitted to the apparatus through inlet 3 and mass flow meter 4 and could be withdrawn from the apparatus through outlet 5 and mass flow meter 6. Vessels 1 and 2 were provided with inlet and outlet filters 7, 8, 9 and 10 respectively. Solenoid valves 11 to 17 were provided in the inlets to the vessels 1 and 2 and in lines between the inlets and outlets of the vessels and in a line to a vent 18. The operation of the valves was in accordance with signals from a programmable logic controller (not shown). The beds were pressurised, equalised and depressurised according to a preprogrammed sequence. The product flow and cycle time were varied while keeping the equalisation time between the beds constant. The vents were pressurised with air at 7 bar gauge (0.8 MPa absolute). The product taken off from outlet line 5 was analysed using a mass spectrometer. The valve operating sequence for any given cycle time was as follows.

Starting with all valves closed, valve 11 was opened and vessel 1 was pressurised with air. Five seconds later valve 17 was opened and product taken off from vessel 1.

Valve 11 was then closed.

Valves 16, 13 and 14 were opened so connecting the inlets and outlets of vessels 1 and 2. The carbon beds in the vessels are thus brought to the same pressure.

After two seconds valves 16 and 14 were closed.

Valve 15 was then opened so as to depressurise vessel 1 through vent 18. Valve 12 is opened to pressurise vessel 2 with air from the inlet.

Valve 17 is opened after 5 seconds and product (nitrogen) is taken off.

Valves 12 and 15 are closed. Valves 14 and 16 are opened so that the beds in vessels 1 and 2 are equilibrated.

Valves 14 and 13 are closed. Valve 15 is opened and vessel 2 is depressurised.

This procedure was repeated automatically until the oxygen level in the product flow from line 5 reached a constant value. The results for different cycle times and air flows at the inlet are given in Table 1.

The percentage oxygen is the percentage of oxygen in the gas recovered through line 5. The nitrogen recovery represents the proportion of the total nitrogen in the air fed to the process which is recovered in the outlet line.

### Example 4

An experiment was carried out as in Example 3 using the carbon product of Example 2. The results are shown in Table 2.

### Comparative Test A

This is a Comparative Test not according to the invention. Example 3 was repeated but using a commercially available carbon sold for use in the separation of nitrogen and oxygen by pressure swing adsorption. It is believed that this carbon is derived from coal.

The results are shown in Table 3.

In the production of nitrogen by pressure swing adsorption it is desirable to obtain low levels of oxygen and nitrogen. However it is also important that for any given oxygen level the percentage nitrogen recovery is high. The process involves compression and decompression of air. A low nitrogen recovery means that large quantities of air will have been expensively compressed only to be decompressed without giving useful nitrogen product. A comparison of the results in Tables 1 and 2 with the results in Table 3 shows that where the nitrogen recoveries in Table 3 are comparable with those in Tables 1 and 2 the oxygen content of the recovered gas is considerably lower in Tables 1 and 2. Where the purity of the nitrogen is comparable then the percentage nitrogen recovery is very much higher in the percentage nitrogen recovery obtained in Tables 3 4 is considerably higher than that obtained in Comparative Test A.

**Table 1**

| Cycle Time (min) | Inlet flow (Nm3/h/m3) | Product flow (Nm3/h/m3) | % Oxygen | % Nitrogen recovery |
|---|---|---|---|---|
| 1 | 395 | 41 | 0.6 | 13.2 |
| 1 | 433 | 70 | 0.8 | 20.4 |
| 1 | 443 | 83 | 0.8 | 23.8 |
| 1 | 476 | 112 | 1.2 | 29.7 |
| 1 | 510 | 144 | 1.7 | 35.5 |
| 1 | 605 | 231 | 3.3 | 47.3 |
| 1 | 704 | 325 | 5.5 | 55.9 |
| 2 | 296 | 48 | 0.5 | 20.7 |
| 2 | 327 | 79 | 1.0 | 30.6 |
| 2 | 368 | 116 | 2.0 | 39.5 |
| 2 | 393 | 143 | 3.1 | 45.1 |
| 2 | 454 | 201 | 5.5 | 53.5 |
| 2 | 576 | 324 | 10.8 | 64.4 |
| 3 | 228 | 41 | 0.7 | 23.1 |
| 3 | 261 | 68 | 1.5 | 33.1 |
| 3 | 279 | 87 | 2.5 | 38.9 |
| 3 | 309 | 115 | 4.4 | 45.7 |
| 3 | 336 | 143 | 6.3 | 50.9 |
| 5 | 174 | 42 | 1.8 | 30.3 |
| 5 | 235 | 84 | 6.6 | 42.9 |
| 5 | 251 | 114 | 10.7 | 52.2 |
| 5 | 281 | 143 | 12.8 | 57.1 |

**Table 2**

| Cycle Time (min) | Inlet flow (Nm3/h/m3) | Product flow (Nm3/h/m3) | % Oxygen | % Nitrogen recovery |
|---|---|---|---|---|
| 1 | 448 | 45 | 0.71 | 12.7 |
| 1 | 486 | 79 | 1.08 | 20.7 |
| 1 | 493 | 85 | 1.49 | 21.7 |
| 1 | 522 | 112 | 1.66 | 26.9 |
| 1 | 555 | 143 | 2.17 | 32.3 |
| 1 | 598 | 198 | 3.56 | 40.9 |
| 1 | 666 | 270 | 5.40 | 49.1 |
| 2 | 300 | 44 | 1.01 | 18.6 |
| 2 | 352 | 85 | 2.20 | 29.4 |
| 2 | 385 | 121 | 3.80 | 38.6 |
| 2 | 405 | 143 | 4.86 | 43.1 |
| 2 | 433 | 169 | 5.90 | 46.9 |

**Table 3**

| Cycle Time (min) | Inlet flow (Nm3/h/m3) | Product flow (Nm3/h/m3) | % Oxygen | % Nitrogen recovery |
|---|---|---|---|---|
| 1 | 398 | 42 | 1.9 | 13.2 |
| 1 | 415 | 56 | 2.2 | 17.0 |
| 1 | 418 | 65 | 2.5 | 19.5 |
| 1 | 423 | 71 | 2.8 | 20.8 |
| 1 | 441 | 87 | 3.5 | 24.5 |
| 1 | 503 | 145 | 5.9 | 34.6 |
| 3 | 189 | 42 | 4.4 | 27.0 |
| 3 | 231 | 53 | 5.7 | 27.5 |
| 3 | 208 | 59 | 6.6 | 33.8 |
| 3 | 218 | 73 | 8.9 | 39.0 |
| 3 | 229 | 87 | 10.4 | 43.6 |
| 5 | 137 | 41 | 8.8 | 35.3 |
| 5 | 150 | 51 | 10.7 | 39.0 |
| 5 | 149 | 56 | 11.4 | 42.8 |
| 5 | 167 | 72 | 13.4 | 47.9 |
| 5 | 179 | 86 | 14.8 | 52.8 |

### Example 5

The starting material was Novolak resin EX BP Chemicals. The resin was part cured in an air circulating oven at 150°C for 2 hours. The resulting cured resin was ground to a particle size of below 106 micrometres. The ground resin was then mixed with 7.5 wt% hexamethylenetetromine and 10 wt% polyethylene glycol (added in aqueous solution). The mixture was then extruded at a diameter of 2 mm and air dried. The extrudate was cured at 150°C for 1 hour and ion exchanged by immersion in aqueous sodium acetate solution (0.5M) for 19 hours. The exchanged resin was washed with water until the pH of solution was neutral. The ion exchanged extrudate was carbonised by heating to 780°C in a vacuum carbonisation furnace at a heating rate of 5°C/min, after the sample has been evacuated to a pressure below 10⁻¹ mbar. The carbonisation temperature of 780°C was held for 15 minutes and then cooled to room temperature while maintaining the vacuum.

### Example 6

The starting material was Novolak resin EX BP Chemicals. The resin was part cured in an air circulating oven at 150°C for 2 hours. The resulting pre-cured resin was ground to a particle size of below 106 micrometres. The ground resin was then mixed with 7.5 wt% hexamethylenetetramine and 12.5 wt% polyethylene glycol (added in aqueous solution). The mixture was then extruded at a diameter of 2 mm and air dried. The extrudate was post-cured at 150°C for 1 hour, and ion exchanged by immersion in aqueous sodium acetate solution (0.5M) for 19 hours. The exchanged resin was washed with water until the pH of solution was neutral. The ion exchanged extrudate was carbonised by heating to 800°C in a vacuum carbonisation furnace at a heating rate of 5°C/min, after the sample has been evacuated to below 10⁻¹ mbar. The carbonisation temperature of 800°C was held for 15 minutes and then cooled to room temperature while maintaining vacuum.

The products of Examples 5 and 6 were tested as in Example 3. The results are shown in Tables 4 and 5.

**Table 4**

| Cycle Time (min) | Inlet flow (Nm³/h/m³) | Product flow (Nm³/h/m³) | % Oxygen | % Nitrogen recovery |
|---|---|---|---|---|
| 1 | 352 | 48 | 0.4 | 17.5 |
| 1 | 393 | 86 | 0.7 | 27.7 |
| 1 | 428 | 114 | 1.1 | 33.8 |
| 1 | 485 | 170 | 2.0 | 44.0 |
| 1 | 522 | 205 | 2.8 | 49.0 |
| 1 | 604 | 285 | 4.9 | 57.5 |

**Table 5**

| Cycle Time (min) | Inlet flow (Nm³/h/m³) | Product flow (Nm³/h/m³) | % Oxygen | % Nitrogen recovery |
|---|---|---|---|---|
| 1 | 429 | 57 | 1.3 | 17.0 |
| 1 | 459 | 83 | 1.4 | 23.0 |
| 1 | 528 | 144 | 2.3 | 34.0 |
| 1 | 565 | 188 | 3.1 | 41.0 |
| 1 | 651 | 261 | 4.2 | 49.0 |
| 1 | 733 | 350 | 6.0 | 57.0 |

### Example 7

Novolak resin Ex BP Chemicals was part cured in an air circulating oven at 150°C for 2 hours. The resulting pre-cured resin was ground to a particle size of below 106 micrometres. The ground resin was then mixed with an aqueous solution of 7.5 wt hexamethylenetetramine, 12.5 wt% polyethyleneglycol, and 0.04 wt% Na (added as sodium acetate). The mixture was then extruded at a diameter of 2 mm and air dried. The resin extrudate was carbonised by heating to 765°C in a vacuum carbonisation furnace at a heating rate of 5°C/min after the sample had been evacuated to below 10⁻¹ mbar. The carbonisation temperature of 765°C was held for 15 mintures and then cooled to room temperature while maintaining vacuum.

### Group IA metal content

The sodium content of the carbon products produced in the Examples 1, 2, 5, 6 and 7 was determined as moles per mole of carbon. The results are given in Table 6.

**Table 6**

| Experiment | Moles of Na/moles of C |
|---|---|
| 1 | 4.2 x 10⁻⁴ |
| 2 | 1.6 x 10⁻⁴ |
| 5 | 4.7 x 10⁻⁴ |
| 6 | 5.2 x 10⁻⁴ |
| 7 | 5.7 x 10⁻⁴ |

## Claims

1. The process for the production of a carbon molecular sieve suitable for use in the separation of gases which comprises
(a) treating a thermoset phenolic resin with cations of a metal of Group IA of the Periodic Table so as to deposit on the resin a total quantity of Group IA metal in the range of from 1 x 10⁻⁶ to 1 x 10⁻² moles per mole of carbon in the final molecular sieve product, and subsequently
(b) carbonising the thermoset phenolic resin by heating it to a temperature in the range of from 600 to 1000°C while maintaining a reduced pressure over the material being carbonised at least while the carbon is being heated at a temperature above 500°C.

2. The process according to claim 1 wherein the quantity of Group IA metal deposited on the resin is in the range 1 x 10⁻⁴ to 6 x 10⁻⁴ moles per mole of carbon in the final product.

3. A process according to claims 1 or claim 2 wherein a mixture of a thermoplastic phenolic resin and a cross-linking agent are subjected to a pre-cure step to produce a partially cured thermoset resin which is then comminuted to give particles of partially cured phenolic resin before treatment with cations of Group IA metals.

4. A process according to any one of the preceding claims wherein a compound of the Group IA metal is mixed with particles of partially cured thermoset resin and is heated to complete curing of the resin.

5. A process according to claim 3 wherein the partially cured resin and the Group IA metal compound are mixed with additional curing agent before further heating to cure the resin.

6. A process according to claims 1 or claim 2 wherein the thermoset phenolic resin is treated with an aqueous solution of a Group IA metal compound so as to introduce Group IA metal cations into the resin by ion exchange.

7. A process according to claim 6 wherein the thermoset phenolic resin has been produced by the steps of
(a) partially curing a phenolic resin to give a partially cured thermoset phenolic resin,
(b) comminuting the phenolic resin,
(c) mixing the comminuted resin with additional curing agent and with a polyethylene glycol,
(d) forming the mixture containing comminuted resin into a shaped article, and
(e) heating the shaped article to further cure it.

8. A process for separating oxygen and nitrogen by pressure swing adsorption using a carbon made according to any one of the preceding claims.
